# EUROPÄISCHE PATENTSCHRIFT

(11) **EP 2 205 426 B1**
(45) Veröffentlichungstag und Bekanntmachung des Hinweises auf die Patenterteilung: **03.06.2015**
(21) Anmeldenummer: 08801847.8
(22) Anmeldetag: 05.09.2008
(51) Int. Cl.: B29C 53/08, B29C 70/78, B29C 70/20

(54) **VERFAHREN ZUR HERSTELLUNG EINES FORMKÖRPERS AUS KUNSTSTOFF**
METHOD FOR PRODUCING A MOULDING FROM PLASTIC
PROCÉDÉ POUR FABRIQUER UN CORPS FAÇONNÉ À PARTIR DE MATIÈRE PLASTIQUE

(30) Priorität: 01.10.2007 DE 102007047012
(43) Veröffentlichungstag der Anmeldung: 14.07.2010
(73) Patentinhaber: Thermoplast Composite GmbH, 91474 Langenfeld (DE)
(72) Erfinder: BÖRGER, Herbert, 91474 Langenfeld (DE)
(74) Vertreter: Hofmann, Matthias
(86) Internationale Anmeldenummer: PCT/EP2008/007252
(87) Internationale Veröffentlichungsnummer: WO 2009/046795

(56) Entgegenhaltungen:
- EP-A- 0 045 176
- EP-A- 0 108 652
- EP-A- 0 533 524
- WO-A-2007/118643
- FR-A- 2 689 811
- US-A- 5 456 591

## Beschreibung

Die Erfindung richtet sich auf ein Verfahren zur Herstellung eines Formkörpers ausgehend von einem mit inkorporierten Fasern verstärkten Kunststoffprofil, wobei das Kunststoffprofil erhitzt und mittels einer äußeren bzw. inneren Matrize verformt wird.

Ein derartiges Verfahren ist bekannt aus WO 2007/118643.

Das vorbekannte Verfahren eignet sich insbesondere zur Herstellung von Kunststoffformkörpern mit durchgehend gleichbleibender Krümmung, wie z. B. den Kopf eines Tennisschlägers.

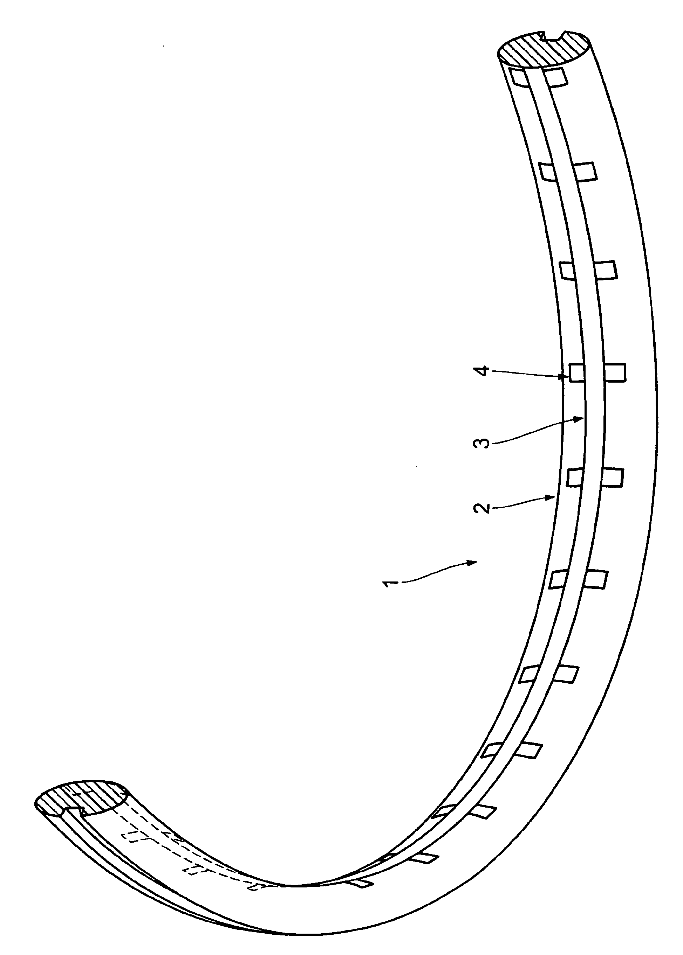

Aus der EP 0 108 652 A1 ist ein Verfahren zur Herstellung eines Tennisschläger-Rahmens bekannt, bei dem ein Kunststoffprofil, das mit inkorporierten Fasern verstärkt ist, erhitzt und mittels einer äußeren Matrize verformt wird. Bandartige Bereiche, die auf seitlichen Stirnwänden des Kunststoffprofils bei der Ausführung nach der Figur 2 der EP 0 108 652 A1 aufgebracht sind, können unter anderem eine Tragfunktion für das Kunststoffprofil haben und dienen der Dekoration. Die bandartigen Bereiche können durch gemeinsame Extrusion zusammen mit dem Kunststoffprofil hergestellt werden.

Weitere Formkörper aus Kunststoff und Verfahren zu ihrer Herstellung sind bekannt aus der EP 0 045 176 A2, der FR 2 689 811 A1, der US 5 456 591, der WO 2007/118 643 A1 und der EP 0 533 524 A1.

Hiervon ausgehend liegt der Erfindung die Aufgabe zugrunde, ein Verfahren so auszugestalten, dass hiermit auch komplexer gestaltete Formkörper präzise, schnell und kostengünstig hergestellt werden können.

Diese Aufgabe wird erfindungsgemäß durch ein Herstellungsverfahren mit den im Anspruch 1 angegebenen Merkmalen gelöst.

Hierfür kommen so genannte Organoblech-Profile auf der Basis praktisch nicht dehnfähiger Hochleistungsfasern in Form von Endlosfasern mit 0° bis 90°-Faserwinkeln zur Profilachse in Betracht. Die nach dem Verfahren hergestellten Produkte zeichnen sich durch eine besondere hohe mechanische Effizienz bei niedrigem Gewicht aus. Vorzugsweise werden solche Organoblech-Profile eingesetzt, die wesentliche Anteile von axial ausgerichteten (0°) Faserorientierungen enthalten und dementsprechend nicht aus Flechtstrukturen aufgebaut sind. Dabei legt sich das Kunststoffprofil als Rohprofil beim Umformen in einem die Außengeometrie ausbildenden, durch eine äußere und innere Matrize gebildeten Formnest so an die Wandung an, dass die Endlosfasem gestreckt bleiben und dementsprechend ein Knicken oder Ausbeulen der Faserbündel in axialer Richtung vermieden wird, wodurch die Eigenschaften des Organoblechs auch nach der Umformung erhalten bleiben.

Erfindungsgemäß wird also für die Verstärkung gerade keine Flechtstruktur verwendet, wie dies beim Stand der Technik weitgehend der Fall ist. Derartige Flechtstrukturen ermöglichen keinen Druckaufbau vor dem Schließen der Form unter Vordrucksetzen, wie dies im Rahmen der Erfindung gegebenenfalls, wie nachfolgend noch erläutert wird, vorteilhaft ist.

In weiterer Ausgestaltung der Erfindung ist vorgesehen, dass die bandartigen Bereiche in das Kunststoffprofil integriert oder auf dieses aufgesetzt sind, wobei sie nach der endgültigen Formgebung in der Kunststoffmatrix verbleiben oder von dieser entfernt werden können.

Bei einer ersten vorteilhaften Ausführungsform ist vorgesehen, dass die bandartigen Bereiche durch eine inkorporierte zweite Kunststoffkomponente gebildet sind, die so ausgewählt ist, dass sie bei der Umformtemperatur der Kunststoffmatrix knapp ihren Glasübergangspunkt überschritten hat.

Beispielsweise kommt als Kunststoffmatrix Polyamid 6 mit einem Schmelzpunkt von 223° C in Betracht und als zweite Kunststoffkomponente amorphe PES POLYETHERSULFON oder PES POLYETHERIMID mit Glasübergangstemperaturen von 225° C bzw. 180° C.

Vorzugsweise sind die bandförmigen Bereiche in dem Kunststoffprofil derart angeordnet, dass sie bei der anschließenden Heißumformung den Scheitellinien der Profilkrümmungen folgen.

Bei einer zweiten Ausführungsform können die bandförmigen Bereiche durch elastische Metallbänder gebildet sein, welche sich in Umfangsrichtung über einen Bereich von weniger als 1/8 des Profilumfangs erstrecken.

Diese elastischen Metallbänder können bei bestimmten Anwendungen auch nach der Umformung im Kunststoffprofil verbleiben und funktionell wirksam sein, z. B. als Dehnungsmessstreifen, zur Leitfähigmachung, insbesondere zur Erdung oder Blitzschutz, oder als Bruchsensor.

Eine dritte Ausführungsform sieht vor, dass die bandartigen Bereiche dadurch ausgebildet werden, dass in diesen Bereichen eine geringere Erwärmung als in den umgebenden Bereichen erfolgt, so dass sie als relativ zur Kunststoffmatrix härteres Skelett verbleiben. Diese härteren Bereiche können durch Kühlung oder Abschattung beim Aufheizen gebildet werden.

Dabei kann günstigerweise vorgesehen sein, dass die länglichen Bereiche quer zur Längsrichtung rippen- bzw. stegartige Verbreiterungen in Umfangsrichtung verlaufend aufweisen, deren Erstreckung in Umfangsrichtung weniger als 1/8 des Umfangs beträgt.

Bei allen hier beschriebenen Ausführungsformen kann mit Vorteil vorgesehen sein, dass das Innere des Kunststoffprofils beim Umformen mit einem Druck von 50 bis 500 mbar beaufschlagt wird.

Eine Variante des bereits angesprochenen Verfahrens unter Verwendung zweier unterschiedlicher Kunststoffkomponenten sieht vor, dass die bandförmigen Bereiche derart durch eine innen liegende zweite Kunststoffkomponente gebildet sind, dass diese sich ganz oder weitgehend um den Umfang des Profils herum erstreckt und mit der Kunststoffmatrix eine interlaminare Haftung ausbildet, wenn beide Kunststoffkomponenten beim Umformen über ihren Schmelzpunkt, von z. B. über 223° C, erwärmt werden.

Eine weitere Variante des erfindungsgemäßen Verfahrens zeichnet sich dadurch aus, dass zum Aufbau eines Forminnendrucks in das Innere des Kunststoffprofils ein temperaturbeständiger leichter Schaumstoff eingebracht wird, der nach dem Umformvorgang im Kunststoffprofil verbleibt, wobei vorzugsweise ein Polyethersulfon-Hartschaumstoff in einem Rohdichtebereich von 30 bis 50 kg/m³ eingesetzt wird.

Nachfolgend wird die Erfindung anhand eines bevorzugten Ausführungsbeispiels in Verbindung mit der Zeichnung näher beschrieben. Diese zeigt schematisch eine perspektivische Ansicht eines Ausschnitts eines erfindungsgemäßen Kunststoffprofils.

Ein in der Zeichnung dargestelltes Kunststoffprofil 1 besteht aus einer Kunststoffmatrix 2.

In die Matrix 2 inkorporiert sind in der Zeichnung nicht einzeln dargestellte, in Längsrichtung und parallel zueinander verlaufende Verstärkungsfasern.

Weiterhin inkorporiert sind in Längsrichtung verlaufende bandartige Bereiche 3 aus einer zweiten Kunststoffkomponente mit sich in Umfangsrichtung erstreckenden quer verlaufenden Stegen 4. Die zweite Kunststoffkomponente weist einen höheren Schmelzpunkt auf als die erste Kunststoffkomponente, sodass bei einem Aufschmelzen der ersten Kunststoffkomponente zum Umformen die zweite Kunststoffkomponente noch eine Rest-Stabilität besitzt und dementsprechend dafür sorgt, dass eine wellenförmige Verschiebung der Verstärkungsfasern beim Umformen vermieden wird.

## Patentansprüche

1. Verfahren zur Herstellung eines Formkörpers ausgehend von einem mit inkorporierten Fasern verstärkten Kunststoffprofil (1) als erste Kunststoffkomponente, wobei das Kunststoffprofil aus einer ersten Kunststoffmatrix erhitzt und mittels einer äußeren und/oder inneren Matrize verformt wird, wobei
- das Kunststoffprofil (1) vorzugsweise in Längsrichtung verlaufende bandartige Bereiche aus einer zweiten Kunststoffkomponente (3) aufweist, die bei der Umformtemperatur der Kunststoffmatrix (2) härter und unnachgiebiger sind als die Kunststoffmatrix (2) und dementsprechend einem seitlichen wellenförmigen Ausweichen der Fasern entgegenwirken,
- die bandförmigen Bereiche (3) derart inkorporiert innenliegend sind, dass diese bandförmigen Bereiche sich um den Umfang des Profils herum erstrecken und mit der Kunststoffmatrix (2) eine interlaminare Haftung ausbildet, wenn beide Kunststoffkomponenten beim Umformen über ihren Schmelzpunkt erwärmt werden.

2. Verfahren nach Anspruch 1, **dadurch gekennzeichnet, dass** die bandartigen Bereiche in das Kunststoffprofil integriert sind.

3. Verfahren nach Anspruch 2, **dadurch gekennzeichnet, dass** die bandartigen Bereiche (3) nach der endgültigen Formgebung in der Kunststoffmatrix (2) verbleiben oder von dieser entfernt werden.

4. Verfahren nach einem der Ansprüche 1 bis 3, **dadurch gekennzeichnet, dass** die zweite Kunststoffkomponente so ausgewählt ist, dass sie bei der Umformtemperatur der Kunststoffmatrix (2) knapp ihren Glasübergangspunkt überschritten hat.

5. Verfahren nach Anspruch 4, **dadurch gekennzeichnet, dass** die Kunststoffmatrix (2) Polyamid 6 und die zweite Komponente amorphe PES POLYETHERSULFON oder PES POLYETHERIMID sind.

6. Verfahren nach Anspruch 1, **dadurch gekennzeichnet, dass** die bandförmigen Bereiche (3) in dem Kunststoffprofil (1) derart angeordnet sind, dass sie bei der anschließenden Heißumformung den Scheitellinien der Profilkrümmungen folgen.

7. Verfahren nach Anspruch 1, **dadurch gekennzeichnet, dass** die bandartigen Bereiche (3) dadurch ausgebildet werden, dass in diesen Bereichen eine geringere Erwärmung als in den umgebenden Bereichen erfolgt, sodass sie als relativ zur Kunststoffmatrix (2) härteres Skelett verbleiben.

8. Verfahren nach Anspruch 7, **dadurch gekennzeichnet, dass** die bandförmigen Bereiche (3) durch Kühlung oder Abschattung ausgebildet werden.

9. Verfahren nach Anspruch 7, **dadurch gekennzeichnet, dass** die bandartigen Bereiche (3) rippen- bzw. stegartige Verbreiterungen (4) in Umfangsrichtung aufweisen, deren Erstreckung in Umfangsrichtung weniger als 1/8 des Umfangs beträgt.

10. Verfahren nach Anspruch 1, **dadurch gekennzeichnet, dass** das Innere des Kunststoffprofils (1) beim Umformen mit einem geringen Druck von 50 bis 500 mbar beaufschlagt wird.

11. Verfahren nach Anspruch 1, **dadurch gekennzeichnet, dass** zum Aufbau eines Forminnendrucks in das Innere des Kunststoffprofils (1) ein temperaturbeständiger leichter Schaumstoff eingebracht wird, der nach dem Umformvorgang im Kunststoffprofil (1) verbleibt.

12. Verfahren nach Anspruch 11, **dadurch gekennzeichnet, dass** der Schaumstoff ein Polyethersulfon-Hartschaumstoff in einem Rohdichtebereich von 30 bis 50 kg/m³ ist.

## Claims

1. Method for the production of a moulded part based on a plastic profile (1) as a first plastic component, reinforced by incorporated fibres, with the plastic profile (1) made of a plastic matrix being heated and deformed by means of an outer and/or inner mould, respectively, wherein
- the plastic profile (1) is provided with strap-like areas (3) made of a second plastic component (3) preferably extending in the longitudinal direction which are relatively harder and less flexible at the deformation temperature of the plastic matrix (2) than the plastic matrix (2), thus counteracting a lateral wave-like displacement of the fibres,
- the strap-like areas (3) are incorporated inside such, that these strap-like areas extend entirely around the circumference of the profile, thus forming an interlaminar bond with the plastic matrix (2) when both plastic components are heated up to temperatures above their melting point, for example above 223°C, during the deformation process.

2. Method according to claim 1, **characterized in that** the strap-like areas are integrated in the plastic profile.

3. Method according to claim 2, **characterized in that** the strap-like areas (3) remain inside the plastic matrix (2) or are removed therefrom when the forming process is completed.

4. Method according to one of claims 1 to 3, **characterized in that** the second plastic component is selected in a way that the glass transition point thereof is just exceeded when the deformation temperature of the plastic matrix (2) is reached.

5. Method according to claim 4, **characterized in that** the plastic matrix (2) is polyamide 6 and the second component is amorphous PES POLYETHERSULPHONE or PES POLYETHERIMIDE.

6. Method according to claim 1, **characterized in that** the strap-like areas (3) are arranged in the plastic profile (1) in a way as to follow the apex lines of the profile curves during the subsequent thermal deformation process.

7. Method according to claim 1, **characterized in that** the strap-like areas (3) are formed by providing less heating in these areas than in the surrounding areas, thus remaining as a harder frame in relation to the plastic matrix (2).

8. Method according to claim 7, **characterized in that** the strap-like areas (3)are formed by means of cooling or shadowing.

9. Method according to claim 7, **characterized in that** the strap-like areas (3) are provided with wider portions (4) in the shape of ribs or webs, respectively, in the circumferential direction, the extension of which, in the circumferential direction, amounting to less than 1/8 of the circumference.

10. Method according to claim 1, **characterized in that** the interior of the plastic profile (1) is acted upon with a low pressure of 50 to 500 mbar during the deformation process.

11. Method according to claim 1, **characterized in that** in order to build up an internal mould pressure, the interior of the plastic profile (1) is provided with a temperature-resistant, lightweight foam which remains inside the plastic profile (1) when the deformation process is completed.

12. Method according to claim 11, **characterized in that** the foam is a rigid-foam polyethersulphone material in a bulk-density range of 30 to 50 kg/m³.

## Revendications

1. Procédé de fabrication d'un corps façonné en partant d'un profilé en matière plastique (1) renforcé de fibres incorporées en tant que premier composant en matière plastique, où le profilé en matière plastique est chauffé à partir d'une première matrice en matière plastique et est façonné au moyen d'une matrice extérieure et/ou intérieure, où
- le profilé en matière plastique (1) présente des zones s'étirant de préférence dans le sens longitudinal sous forme de bandes constituées d'un deuxième composant en matière plastique (3), qui sont plus dures et plus rigides que celles de la première matrice en matière plastique (2) lors du remodelage en température de la deuxième matrice en matière plastique (2) et par conséquent exercent une action contre un affaissement latéral en forme de vagues des fibres,
- les zones en forme de bandes (3) sont incorporées à l'intérieur de telle sorte que ces zones en forme de bandes s'étendent autour du pourtour du profilé et qu'une adhésion inter-laminaire se développe avec la première matrice en matière plastique (2), lorsque les deux composants en matière plastique sont chauffés au-delà de leur point de fusion pendant le remodelage.

2. Procédé selon la revendication 1, **caractérisé en ce que** les zones en forme de bandes sont intégrées dans le profilé en matière plastique.

3. Procédé selon la revendication 2, **caractérisé en ce que** les zones en forme de bandes (3) sont conservées après le dernier façonnage dans la matrice en matière plastique (2) ou sont enlevées par celui-ci.

4. Procédé selon l'une des revendications 1 à 3, **caractérisé en ce que** le deuxième composant en matière plastique est choisi de telle sorte qu'il dépasse à peine son point de transition vitreuse lors du remodelage en température de la matrice en matière plastique (2).

5. Procédé selon la revendication 4, **caractérisé en ce que** la matrice en matière plastique (2) est du polyamide 6 et le deuxième composant est un PES polyéther sulfone ou un PES polyéther imide amorphes.

6. Procédé selon la revendication 1, **caractérisé en ce que** les zones en forme de bandes (3) sont agencées dans le profilé en matière plastique (1) de telle manière qu'elles suivent les courbures du profilé lors du remodelage en température ultérieur des lignes apex.

7. Procédé selon la revendication 1, **caractérisé en ce que** les zones en forme de bandes (3) sont formées par le fait qu'un échauffement moins important se produit dans ces zones que dans les zones environnantes, de sorte qu'elles conservent un squelette plus dur relativement à la matrice en matière plastique (2).

8. Procédé selon la revendication 7, **caractérisé en ce que** les zones en forme de bandes (3) sont formées par un refroidissement ou un ombrage.

9. Procédé selon la revendication 7, **caractérisé en ce que** les zones en forme de bandes (3) présentent des élargissements (4) en forme de vagues, respectivement de marches d'escalier, dans la direction circonférentielle, dont l'étirement dans la direction circonférentielle est inférieur à 1/8 de la circonférence.

10. Procédé selon la revendication 1, **caractérisé en ce que** l'intérieur du profilé en matière plastique (1) est soumis à une pression faible de 50 à 500 mbar lors du remodelage.

11. Procédé selon la revendication 1, **caractérisé en ce que**, pour l'apport d'une impression intérieure de moulage, une mousse légère résistante à la température est rapportée à l'intérieur du profilé en matière plastique (1), qui reste dans le profilé en matière plastique (1) après le processus de remodelage.

12. Procédé selon la revendication 11, **caractérisé en ce que** la mousse est une mousse dure de polyéther sulfone ayant un domaine de densité brute de 30 à 50 kg/m³.
